# EUROPEAN PATENT APPLICATION

(11) **EP 2 778 955 A1**
(43) Date of publication of application: **17.09.2014**
(21) Application number: 13159625.6
(22) Date of filing: 15.03.2013
(51) Int. Cl.: G06F 17/30

(54) **Method for processing data and data warehouse for processing data**

(71) Applicant: Ricoh Company Ltd., Tokyo 143-8555 (JP)
(72) Inventor: Skvirski, Alexei, 40472 Düsseldorf (DE)
(74) Representative: Leeming, John Gerard

(57) **Abstract**

A method is for processing data of a parameter counter for an image forming apparatus for a report. The method comprises: storing in a data warehouse data from a plurality of data collector databases; transforming the stored data from the plurality of data collector databases into consolidated data based on the stored data from the plurality of data collector databases, thereby reducing the amount of data stored in the data warehouse; and outputting data of a parameter counter based on the consolidated data. The transforming comprises generating, for a parameter counter, a consolidated counter value corresponding to a predetermined time period from a plurality of counter values corresponding to timings within the predetermined time period.

## Description

### Technical Field

The present invention relates to a method for processing data and to a data warehouse for processing data. More particularly, the data may be data of a parameter counter for an image forming apparatus for a report.

### Background Art

Data collection methods are used in information processing practice. The data may relate to the processes of an image forming apparatus, for example. Data relating to an image forming apparatus are collected by a data collector. The data are stored in a data collector database in the data collector.

A plurality of data collectors may provide data to a central data warehouse that stores the data collected from the plurality of data collectors. The data warehouse outputs data for a report based on the data stored in the data warehouse.

The data may comprise hierarchical attributes. In order to acquire useful data from the data warehouse, online analytical processing (OLAP) may be used. OLAP methods implement specific algorithms for fast data retrieval (e.g. by data compression and aggregation).

Existing software methods of OLAP implementation require a specific software instance being separately set for different reporting functionality. Usually relational databases (e.g. OLTP) use very rigid data storing schemes which cannot be adapted to the changing needs of a network which is arbitrarily changed, in particular with respect to the system components included in it. If a reporting system is based on the OLAP concept, the resulting reports are not very sensitive to the structure of the OLAP database, because the OLAP concept does not specifically define the scope of domain objects and their mutual coherency.

On the other hand, relational database management system (RDBMS) schemes are based on a data domain model which has to comply with very rigid and predefined storage schemes. Therefore modern data processing has brought in the concept of hybrid data processing where the live (operational) data is stored in a relational database (e.g. in a data collector) whereas the reporting part (e.g. in a data warehouse) is covered by a tightly coupled analytical counterpart. This general approach, however, has weaknesses. There have been numerous attempts made to overcome the weaknesses of such a hybrid system by implementing both mechanisms under the single hood of a relational database (e.g. Oracle AWM product [an analytic workspace manager (AWM), Oracle OLAP Java API Developer's Guide, 11g Release 1 (11.1), 2007. Chapter 1]).

However, this approach has the shortcoming that vendor specific and rather complex data queries to the data warehouse are necessary for accessing and searching purposes. This slows down the system as a whole and means that a change in data model is not possible without the risk of losing data or causing the whole database system to break down.

An aim of the present invention is to provide a method for processing data of a parameter counter for an image forming apparatus for a report, in which one or more of the above-mentioned problems are addressed. In particular, an aim of the present invention is to provide a method in which data for a report is accessed and/or provided more cheaply and/or more quickly compared to the prior art.

A further aim of the present invention is to provide a data warehouse that can carry out a method of the present invention. In particular, an aim of the present invention is to provide a data warehouse from which data for a report is accessed and/or provided more cheaply and/or more quickly compared to the prior art.

### Disclosure of the invention

According to the invention, there is provided a method for processing data of a parameter counter for an image forming apparatus for a report, the method comprising: storing in a data warehouse data from a plurality of data collector databases; transforming the stored data from the plurality of data collector databases into consolidated data based on the stored data from the plurality of data collector databases, thereby reducing the amount of data stored in the data warehouse; and outputting data of a parameter counter based on the consolidated data; wherein the transforming comprises generating, for a parameter counter, a consolidated counter value corresponding to a predetermined time period from a plurality of counter values corresponding to timings within the predetermined time period.

Accordingly, data of a parameter counter can be output more quickly from the data warehouse. By generating the consolidated counter value, the amount of data stored in the data warehouse is reduced. Due to the reduction in the amount of data stored in the data warehouse, the data for the report can be acquired more quickly from the data warehouse. Accordingly, it is not necessary to provide an expensive data acquisition system such as OLAP to acquire data quickly from the data warehouse.

Optionally, the data from the plurality of data collector databases are stored in the data warehouse according to the same database management system according to which the data are stored in the plurality of data collector databases.

Accordingly, it is not necessary to use hybrid data processing where the live data is stored in a different type of database from the database that outputs the data for the report. Hence, the problems associated with such a hybrid data processing system are overcome according to the present invention. Furthermore, by requiring only one database management system type (e.g. relationally based, or RDBMS) for both the collector databases and the data warehouse, the network of databases is simplified and easier to maintain.

Optionally, the storing comprises copying the data from the plurality of data collector databases to the data warehouse, wherein the data from the plurality of data collector databases undergoes substantially no data format transformation before being stored in the data warehouse.

Accordingly, the data can be written into the data warehouse from the data collector databases quickly. Data format transformation of the data is unnecessary when copying the data into the data warehouse 20. This reduces the possibility of an error being introduced into the data when writing the data into the data warehouse. Regardless of the type of report required, the data can be faithfully written into the data warehouse using the same method.

Optionally, the data from the plurality of data collector databases are stored in the data warehouse according to a relational database management system.

Accordingly, a standard relational database system can be used to store the data in the data collected databases. The relational database management system is appropriate technology for data storage used elsewhere. It is easily manageable and efficient in data storage. Hence, data can be stored efficiently in the data warehouse from the data collector databases. The relational database system is relatively cheap and well accepted and wide spread on the market.

Optionally, the consolidated data are stored in the data warehouse according to a relational database management system.

Accordingly, data can be retrieved from the data warehouse for the report using standard acquisition techniques for a relational database management system. For example, the universal query language, SQL, can be used for acquiring data from the data warehouse. The relational database system is easily manageable and efficient in data storage. Hence, data can be stored efficiently in the data warehouse from the data collector databases. The relational database system is relatively cheap and well accepted and wide spread on the market. The type of database used in the data warehouse does not need to be changed when transforming the data stored in the data warehouse. This reduces the possibility of an error being introduced into the data when consolidating the data.

Optionally, the method comprises determining, for a parameter counter, a parameter counter type, wherein the generating of the consolidated counter value for the parameter counter depends on the parameter counter type.

Accordingly, the data can be consolidated in different ways depending on the parameter counter type. This allows data corresponding to different parameter counter types to be consolidated according to the present invention. Accordingly, the data can be consolidated in the most appropriate and optimal way for that particular parameter counter type. This helps to minimize the amount of data stored in the data warehouse while retaining all of the relevant data required for outputting for a report.

Optionally, the parameter counter type is determined from a group comprising a cumulative type and a non-cumulative type.

Accordingly, data can be consolidated in an optimal way for both cumulative and non-cumulative parameter counter types. This helps to increase the reduction in the amount of data stored in the data warehouse, which in turn increases the speed at which the data warehouse outputs data for a report in response to a data acquisition query.

Optionally, the generating comprises, for a cumulative parameter counter type, calculating a difference between a counter value at the end of the predetermined time period and a counter value at the start of the predetermined time period so as to generate the consolidated counter value.

Accordingly, for a cumulative parameter counter type, the consolidated data can be generated in a simple way.

Optionally, the generating comprises, for a non-cumulative parameter counter type, summing the plurality of counter values corresponding to timings within the predetermined time period so as to generate the consolidated counter value.

Accordingly, for a non-cumulative parameter counter type, the consolidated data can be generated in a simple way.

Optionally, the transforming comprises deleting the plurality of counter values corresponding to timings within the predetermined time period.

Accordingly, data that is not necessary for the report can be deleted from the data warehouse. This reduces the amount of data stored in the data warehouse, thereby increasing the speed of outputting the data for the report. Meanwhile, any data necessary for the report is retained in the data warehouse.

Optionally, the generating comprises, for a front page counter and a back page counter, for a timing within the predetermined time period, converting the back page counter value to a duplex counter value, and reducing the front page counter value by the back page counter value or the duplex counter value.

Accordingly, for front page counters and back page counters, the amount of data stored in the data warehouse can be further reduced by a factor of up to 2. This reduces the amount of data in the data warehouse, thereby increasing the speed of outputting the data for a report.

Optionally, the storing comprises appending the plurality of data collector databases to each other to form a single database.

Accordingly, the data from the data collector databases can be written into the data warehouse in a faithful way. No extra data storage format transformation is required when adding the data into the data warehouse. This provides a robust and faithful way of copying the data into the data warehouse.

According to the present invention, there is provided a computer program that when implemented on a computer causes the computer to perform the method as set out above.

According to the present invention, there is provided a data warehouse for processing data of a parameter counter for an image forming apparatus for a report, the data warehouse comprising: a memory unit configured to store data from a plurality of data collector databases; a data transforming unit configured to transform the stored data from the plurality of data collector databases into consolidated data based on the stored data from the plurality of data collector databases, thereby reducing the amount of data stored in the data warehouse; and a data outputting unit configured to output data of a parameter counter based on the consolidated data; wherein the data transforming unit comprises a data generating unit configured to generate, for a parameter counter, a consolidated counter value corresponding to a predetermined time period from a plurality of counter values corresponding to timings within the predetermined time period.

According to the present invention, there is provided a network comprising: the data warehouse as set out above; and a plurality of data collectors, each storing a corresponding one of the plurality of data collector databases, wherein each of the data collectors is configured to poll a plurality of image forming apparatuses so as to obtain data of a parameter counter, and to store the obtained data of a parameter counter in the data collector database stored on the data collector.

### Brief Description of the Drawings

The present invention will be described, by way of example, with reference to the accompanying drawings, in which:-
Figure 1 depicts a network according to an embodiment of the present invention;
Figure 2 depicts a flow diagram of a method according to an embodiment of the present invention;
Figure 3 depicts a data warehouse according to an embodiment of the present invention;
Figure 4 depicts a schematic diagram illustrating data sparsity for data of a single image forming apparatus;
Figure 5 depicts a schematic diagram illustrating data sparsity for data of a plurality of image forming apparatuses;
Figure 6 depicts a flow diagram for a transforming step of a method according to an embodiment of the present invention;
Figure 7 depicts a schematic diagram illustrating a step of generating a consolidated counter value for a cumulative parameter counter type according to an embodiment of the present invention;
Figure 8 depicts a schematic diagram illustrating a step of generating a consolidated counter value for a non-cumulative parameter counter type according to an embodiment of the present invention;
Figure 9 depicts a schematic diagram illustrating a step of generating a consolidated counter value for a front page counter and a back page counter according to an embodiment of the present invention;
Figure 10 depicts a flow diagram of a method according to an embodiment of the present invention; and
Figure 11 depicts databases stored in a network according to an embodiment of the present invention.

### Detailed Description

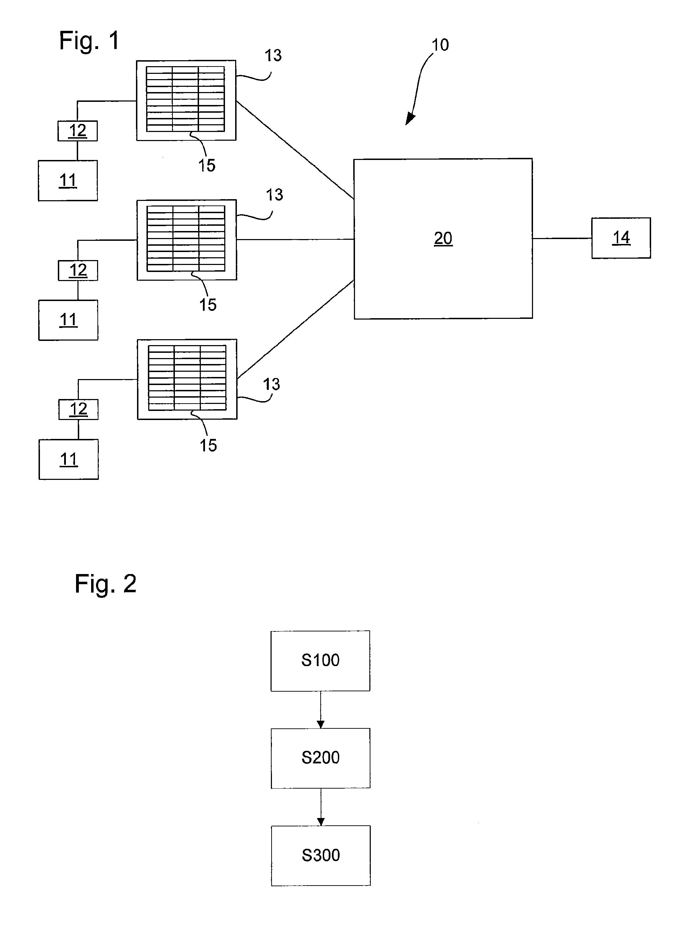

Figure 1 depicts a network 10 according to an embodiment of the present invention. The network comprises a plurality of data collectors 13 and a data warehouse 20. Each of the data collectors 13 is connected to the data warehouse 20. Each of the data collectors stores a corresponding data collector database 15.

Each of the data collectors 13 obtains data from one or more image forming apparatuses 11. Optionally, data is written into the data collector database 15 via a data collector application 12.

The data warehouse 20 obtains data from the data collector databases 15 stored in the data collectors 13. There may be of the order of about 10 or 30 data collectors 13 in data communication with the data warehouse 20.

Each of the data collectors 13 may be in data communication with of the order of about 100 or 1000 image forming apparatuses 11. The data from the image forming apparatuses 11 may be stored in the data collector databases 15 and/or the data warehouse 20 for several years. Hence, each data collector 13 may store a large amount of data in the corresponding data collector database 15. For example, a data collector database may store of the order of about 100 gigabytes of data. The data warehouse 20 may store of the order of about 1000 gigabytes of data, for example.

Optionally, each data collector 13 is in data communication with a plurality of image forming apparatuses 11 in a local system or in a distributed system of devices. This system of devices has to be controlled and maintained. The image forming apparatuses 11 can be printers, copiers, facsimile devices, multi function peripherals (MFPs), or a mixture of these devices, for example. Optionally, the image forming apparatuses 11 may be accessed through other entities such as, for example, personal computers or servers. Optionally, the image forming apparatuses 11 may be accessed directly.

The data is data relating to the image forming apparatuses. In the network 10, a large amount of data specific to each image forming apparatus 11 is stored. Optionally, different types of image forming apparatus, e.g. image forming apparatuses made by different manufacturers, are provided in the network. Optionally, the image forming apparatuses 11 in the network provide data in different formats, which are collected by the data collectors 13.

The image forming apparatuses 11 included in the network 10 may very with respect to their type, manufacturer, capabilities etc. Optionally, the data collector databases 15 are flexible so as to support data in different formats from different types of image forming apparatus 11.

Optionally, the data warehouse 20 outputs data for a report via a reporting application 14. The reporting application 14 may send a request to the data warehouse 20 for acquiring the data for the report. In response to the request, the data warehouse 20 outputs the data for the report.

Figure 2 depicts a flow diagram of a method according to an embodiment of the present invention.

The method comprises storing S 100 in the data warehouse 20 data from a plurality of data collector databases 15. The method comprises transforming S200 the stored data from the plurality of data collector databases 15 into consolidated data based on the stored data from the plurality of data collector databases 15, thereby reducing the amount of data stored in the data warehouse 20. The method comprises outputting S300 data of a parameter counter based on the consolidated data.

The transforming S200 comprises generating, for a parameter counter, a consolidated counter value corresponding to a predetermined time period from a plurality of counter values corresponding to timings within the predetermined time period.

For example, the parameter counter may be a front page counter (e.g. the number of times that the front of a page has been printed). The predetermined time period corresponds to the level of granularity required by the user. Optionally, the user may set the predetermined time period.

For example, if daily based granularity is required, then the predetermined time period may be set to one day. The timings within the predetermined time period correspond to the timings at which the data is obtained by the data collectors 13 from the image forming apparatuses 13. For example if the data were obtained every hour, or every minute, then the timings may be every hour, or every minute, within the predetermined time period or one day. The counter values obtained hourly or every minute are consolidated into a consolidated counter value corresponding to the one day predetermined time period.

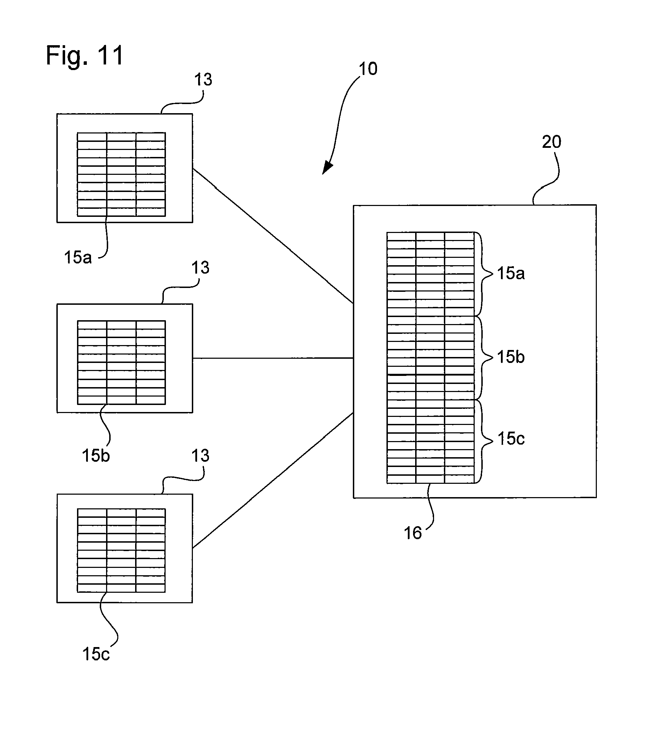

The method includes two stages of data processing. In the first stage the data is copied from the data collector databases 15 into the data warehouse 20. Optionally, the data is stored in the data warehouse 20 in a data warehouse database 16 (see Figure 11). In the second stage of data processing, the data is processed in the data warehouse 20. This processing includes data consolidation. Optionally, the data consolidation is implemented as a set of aggregation rules. This allows automatic updating of the data copied from the data collector databases 15. The transforming step S200 may be performed automatically.

The data consolidation in the transforming step S200 increases the coarseness of the granularity of the data. The level of granularity of the consolidated data can be set as required by the user, for example to a predetermined level. The level of granularity of the consolidated data may correspond to the level of granularity required for the report.

By increasing the coarseness of granularity of the data from hourly or every minute to daily, the amount of data stored in the data warehouse 20 is reduced. This increases the speed at which the data warehouse 20 outputs data for the report in response to a data acquisition request (e.g. from the reporting application 14). This is because the reporting speed depends roughly linearly on the amount of data stored in the data warehouse 20. The data stored in the data warehouse 20 may be extracted, evaluated and processed when the data warehouse 20 receives a request for data acquisition.

Accordingly, data of a parameter counter can be output more quickly from the data warehouse. By generating the consolidated counter value, the amount of data stored in the data warehouse is reduced. Due to the reduction in the amount of data stored in the data warehouse, the data for the report can be acquired more quickly from the data warehouse. Accordingly, it is not necessary to provide an expensive data acquisition system such as OLAP to acquire data quickly from the data warehouse.

As mentioned in the introductory section, it is a known that OLAP systems may be used to acquire the data for the report. The OLAP systems may use proprietary built data compression methods. These systems are known to be both complicated and expensive. The systems are also not standardised, and in particular are not necessarily relationally based.

The present invention overcomes the problems associated with OLAP systems by performing the time based data consolidation specified above. This makes the use of OLAP systems unnecessary. The system of the present invention is cheaper than the known OLAP systems. The present invention provides a system for speeding up the outputting/acquiring of data for a report without requiring complicated data acquisition requests.

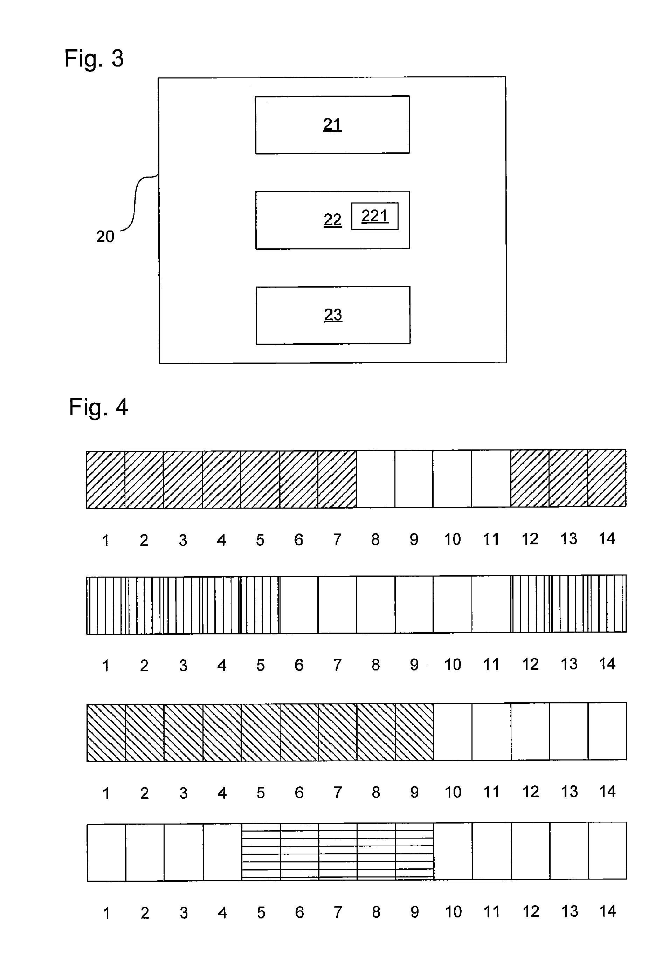

Figure 3 depicts a data warehouse 20 according to an embodiment of the present invention. The data warehouse 20 is for processing data of a parameter counter for an image forming apparatus 11 for a report. The data warehouse 20 comprises a memory unit 21 configured to store data from a plurality of data collector databases 15.

The data warehouse 20 comprises a data transforming unit 22 configured to transform the stored data from the plurality of data collector databases 15 into consolidated data based on the stored data from the plurality of data collector databases 15, thereby reducing the amount of data stored in the data warehouse 20.

The data warehouse 20 comprises a data outputting unit 23 configured to output data of a parameter counter based on the consolidated data.

The data transforming unit 22 comprises a data generating unit 221 configured to generate, for a parameter counter, a consolidated counter value corresponding to a predetermined time period from a plurality of counter values corresponding to timings within the predetermined time period.

The present invention relates to data of a parameter counter, or a plurality of parameter counters. The data is stored in the data collector databases 15 an organised way and may be retained for historical purposes. The data is retrieved for reports.

Optionally, the data comprises one or more hierarchical attributes. For example, a hierarchical attribute may relate to the floor (e.g. of a building) on which different image forming apparatuses 11 are positioned. Another example of a hierarchical attribute is the department (e.g. of a company) that different image forming apparatuses 11 relate/belong to. In these examples, groups of image forming apparatuses 11 may be grouped together according to which building or which company they belong to. These data are recorded in the data collector databases 15.

Data may be stored in the data collector databases at regular intervals. For example, the data collector 13, or a data collector application 12 may poll (e.g. send a request to) a plurality of image forming apparatuses 11 to request data of parameter counters for the relevant image forming apparatus 11. Accordingly, data coming from the image forming apparatuses 11 is stored regularly in time for later data processing by the data warehouse 20.

Optionally, data consumers access reports relating to the data stored in the data collector databases 15. In order to make the data useful to the data consumers, the data is processed into a report.

Each image forming apparatus 11 maintains a set of parameter counters. The parameter counters may be digitally controlled gauges, and may be internal to the image forming apparatus 11. Optionally, the parameter counters indicate, for example, the number of copies being printed, copied etc. The parameter counters may be subject to the specifications of the manufacturer of the image forming apparatus 11.

There are different types of parameter counters. One type of parameter counter is called a cumulative type. This means that the counter value indicates the value of the specific parameter at a specific moment in time. For a cumulative type, at a later moment in time, the counter value may have increased or may have stayed the same (but does not decrease). For example, a parameter counter of the cumulative type may be total printed pages.

Other examples of parameter counters of the cumulative type include a copy counter, a scan counter, a fax counter, etc.

Another type of parameter counter is the non-cumulative type, or absolute type. This means that the counter value represents the number of times that an event has occurred within a set time period, or since the directly preceding moment in time at which the counter value was polled (i.e. requested by the data collector 13 or data collector application 12). Examples of parameter counters of the non-cumulative type may include the number of times that the cover of an image forming apparatus 11 has been opened, and the number of times a toner low alert has been issued by the image forming apparatus 11, for example.

The parameter counter may be specific to a particular user, for example. Hence, there may be a series of different front page counters for a particular image forming apparatus 11, each front page counter being related to printing performed/instructed by a different user. Apart from user, parameter counters may be divided according to other attributes.

For every particular moment in time, each image forming apparatus 11 can be represented as a set of counter values of different kinds (e.g. print counter, scan counter, copy counter etc.). Polling the image forming apparatus 11 for parameter counter data provides only the momentary state of the image forming apparatus 11, as read at the time at which the image forming apparatus was polled for the information.

This data is stored in the data collector databases 15 at the level of granularity at which the image forming apparatus 11 is polled. This amount of data may be more data (in particular data at a finer level of granularity) than is required for the data warehouse 20 to provide the data for the report. This phenomenon may be termed as data sparsity, because the data can be combined or condensed before the data is output for the report. The data can be condensed without removing any of the data required for the report.

The present invention makes use of the data sparsity phenomenon to reduce the amount of data stored within the data warehouse 20 , while retaining the data required for the report at the predetermined (or required) level of granularity. Hence, instead of storing in the data warehouse 20 data for every moment of time (or timing) at which the image forming apparatus 11 was polled, data is condensed so as to include only consolidated counter values for each parameter counter over the predetermined time period. The predetermined time period includes a plurality of timings at which the image forming apparatus 11 is/was polled.

Figure 4 depicts a schematic diagram illustrating data sparsity for an image forming apparatus 11. In Figure 4, each bar represents a different parameter counter. Within each bar, each section represents a counter value at a different timing 1 to 14.

The top bar corresponds to a front page counter. The second bar corresponds to a back page counter. The third bar corresponds to a scan counter. The fourth (i.e. bottom) bar corresponds to a fax counter.

Where a section of the bar is shaded, this means that counter value data exists for that timing. Where a section of the bar is blank, this means that counter value data does not exist for that timing. This can happen where the image forming apparatus 11 is polled for the counter value data, but the image forming apparatus 11 does not reply. For example, the image forming apparatus 11 may be switched off, or otherwise unavailable, or there may be an error.

For example, the top bar of Figure 4 shows that counter value data for the front page counter existed for timings 1 to 7 and 12 to 14 but did not exist for timings 8 to 11. It may not be necessary to provide the data consumer with data at the level of granularity represented by timings 1 to 14. Instead, the level of granularity required may correspond to the predetermined time period that encompasses timings 1 to 14.

According to an example of the present invention, the stored data corresponding to the counter values at timings 1 to 14 is transformed into a consolidated counter value so as to reduce the amount of data stored in the data warehouse 20. The data corresponding to timings 1 to 14 is initially copied from the data collector databases 15 into the data warehouse 20. The transforming step S200 comprises generating, for the front page counter, a consolidated front page counter value corresponding to the predetermined time period (encompassing timings 1 to 14). Hence, instead of the plurality of data points shown in the top bar in Figure 4, a consolidated counter value corresponding to the whole predetermined time period is generated.

Optionally, once the consolidated counter value has been generated, some or all of the rest of the data in the bar in the top of Figure 4 can be deleted. This reduces the amount of data stored in the data warehouse 20.

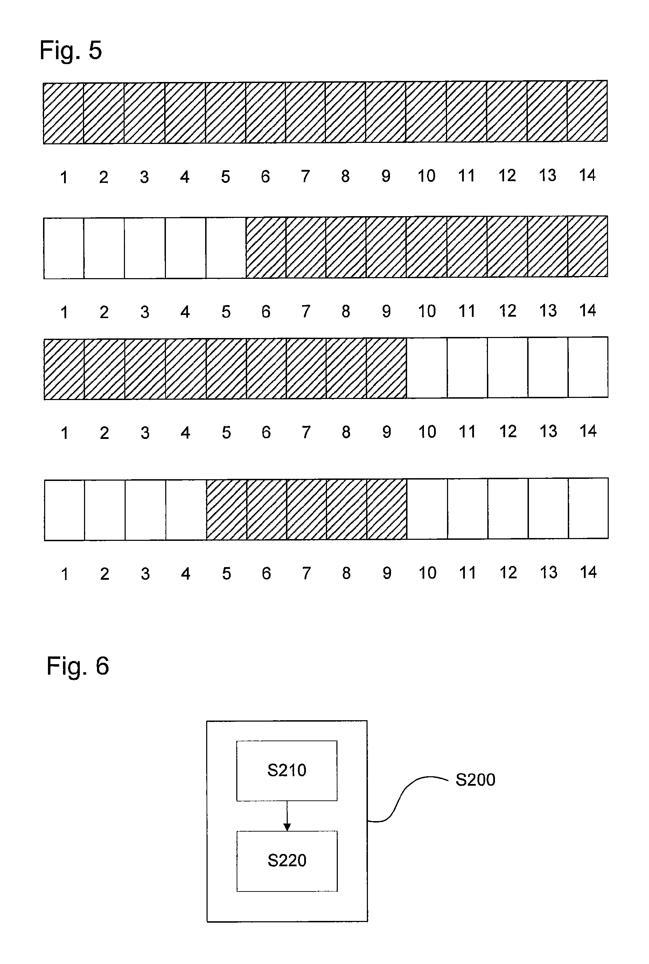

Figure 5 is a schematic diagram illustrating data sparsity for a plurality of image forming apparatuses. Figure 5 shows bars, wherein each bar represents counter value data for a different image forming apparatus 11. As in Figure 4, a shaded section of the bar means that counter value data exists for that timing. A blank section of the bar means that counter value data does not exist for that timing at that image forming apparatus 11.

In the case of Figure 5, each bar can be condensed into a consolidated counter value corresponding to the predetermined time period that encompasses timings 1 to 14. The information regarding which image forming apparatus 11 the data refers to is retained in the consolidated counter value. A consolidated counter value is generated for each image forming apparatus 11. Hence, the data consumer can acquire data at the level of granularity of each image forming apparatus 11 (i.e. a separate consolidated counter value for each image forming apparatus 11).

If the data consumer does not require data at the level of granularity of each individual image forming apparatus 11, then data corresponding to plural image forming apparatuses 11 can be condensed. For example, in the case of Figure 5, the data corresponding to each of the four bars can be condensed into a consolidated counter value. Optionally, the generating comprises summing the consolidated counter value for each of a plurality of image forming apparatuses 11. This generates a consolidated counter value that corresponds to a plurality of image forming apparatuses 11.

Figure 6 depicts a flow diagram of a transforming step S200 according to an embodiment of the present invention. The transforming step S200 comprises generating S210 the consolidated counter value corresponding the predetermined time period. The consolidated counter value is generated from a plurality of counter values corresponding to timings within the predetermined time period.

Optionally, the transforming step S200 comprises deleting S220 the plurality of counter values corresponding to timings within the predetermined time period. Accordingly, a significant proportion of the data in the data warehouse 20 can be deleted, thereby reducing the overall amount of data stored in the data warehouse 20. This speeds up the acquisition of data from the data warehouse 20.

Accordingly, data that is not necessary for the report can be deleted from the data warehouse. This reduces the amount of data stored in the data warehouse, thereby increasing the speed of outputting the data for the report. Meanwhile, any data necessary for the report is retained in the data warehouse.

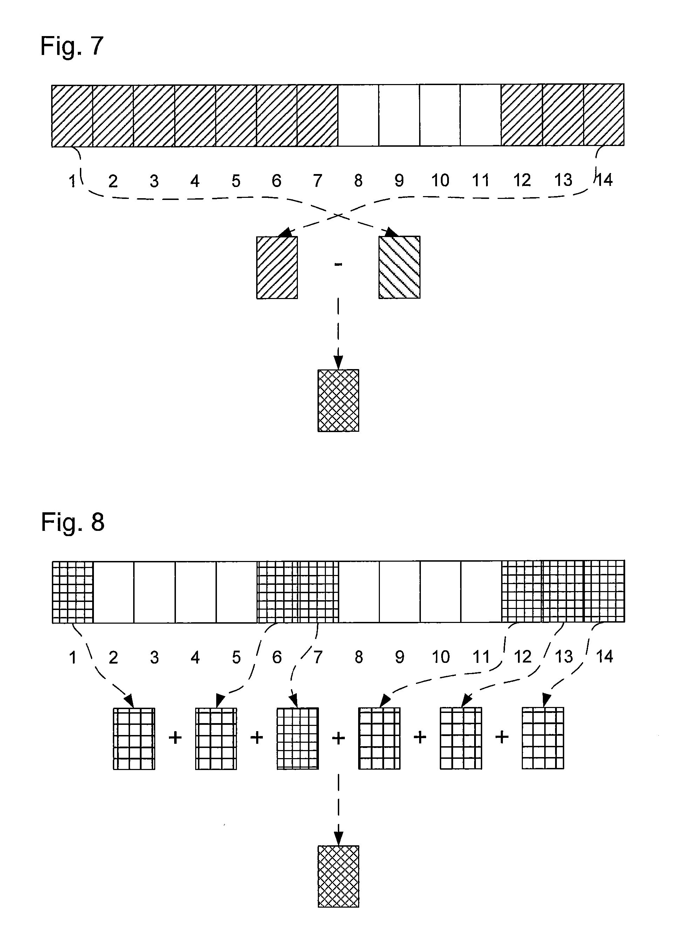

Figure 7 depicts a schematic diagram illustrating one way of generating a consolidated counter value for a cumulative parameter counter. Optionally. the generating step S210 comprises, for a cumulative parameter counter, calculating a difference between a counter value at the end of the predetermined time period and a counter value at the start of the predetermined time period so as to generate the consolidated counter value.

For example, the bar at the top of Figure 7 represents counter values corresponding to timings 1 to 14 within a predetermined time period that encompasses timings 1 to 14. The parameter counter is of the cumulative type. The method involves calculating the difference between the counter value at timing 14 (i.e. at the end of the predetermined time period) and the counter value at timing 1 (i.e. at the start of the predetermined time period). This is represented in the middle of Figure 7, where the counter value at timing 1 is subtracted from the counter value at timing 14.

This produces a consolidated counter value shown at the bottom of Figure 7. The consolidated counter value represents the counter value for the predetermined time period. For example, the consolidated counter value may represent the number of printed pages, scans or faxes completed during the predetermined time period.

Accordingly, for a cumulative parameter counter type, the consolidated data can be generated in a simple way. This allows the data stored in the data warehouse 20 to be transformed in a simple and effective manner.

Figure 8 depicts a schematic diagram illustrating a method for generating the consolidated counter value for a non-cumulative parameter counter. The non-cumulative parameter counter may be, for example, the number of times that the cover of an image forming apparatus 11 has been opened.

The parameter counter is of the non-cumulative type, meaning that each section of the bar in the top of Figure 8 represents the number of times (e.g. opening of the cover) within a set time period corresponding to that section of the bar, or since the preceding timing at which data exists.

These non-cumulative counters may also be created from the cumulative (by their nature) ones. For example, a printing device might send differential values for printed pages (between I^{th} and I^{th} +1 moment of time). These (so-called "delta counters") would behave analogous to the non-cumulative ones.

Optionally, the generating S210 comprises, for the non-cumulative parameter counter, summing the plurality of counter values corresponding to timings within the predetermined time period so as to generate the consolidated counter value. This is shown in the middle of Figure 8, where the counter values for each of the sections of the bar where counter value data exists are summed together. This produces the consolidated counter value shown at the bottom of Figure 8. The counter value at the bottom of Figure 8 represents the number of times (e.g. of the cover opening) for the predetermined time period, which encompasses timings 1 to 14.

Accordingly, for a non-cumulative parameter counter type, the consolidated data can be generated in a simple way. This allows the data stored in the data warehouse 20 to be transformed in a simple and effective manner.

The present invention provides a method that reduces the amount of data stored in the data warehouse 20 by a factor of about 8 to 10. The speed of acquiring data for a report from the data warehouse 20 is increased by a factor of about 8 to 10.

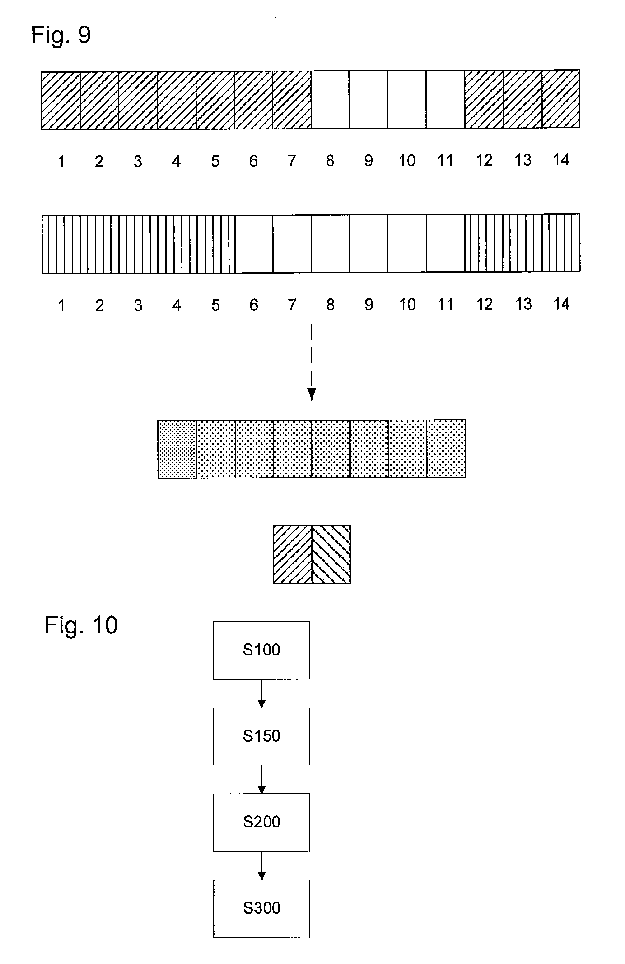

Figure 9 depicts a schematic diagram illustrating a further method for generating a consolidated counter value for a front page counter and a back page counter. In Figure 9, the top bar represents the front page counter values at timings 1 to 14. The second bar represents the back page counter values at timings 1 to 14.

Optionally, the generating step S210 comprises, for a timing within the predetermined time period, converting the back page counter value to a duplex counter value, and reducing the front page counter value by the first page counter value of the duplex counter value.

The third bar in Figure 9 represents the duplex counter. The number of counter values (i.e. sections) in the bar for the duplex counter values corresponds to the number of sections where data exists in the bar for the back page counter. Where no data existed for the back page counter values, no section of data is provided for the duplex counter values. In this way, the back page counter value is converted to a duplex counter value for each timing within the predetermined time period where data exists.

The fourth bar in Figure 9 represents the front page counter value data after reducing the front page counter value by the back page counter value. Hence, the two sections shown in the fourth bar in Figure 9 correspond to the two timings (i.e. sections 6 and 7) in the bar for the front page counter for which there was no back page counter value data.

By combing the front page counter value data and the back page counter value data in this way, the overall number of data is reduced, thereby consolidating the data.

This method illustrated in Figure 9 can be used for other counters other than the front page counter and the back page counter, provided that the plural counters in question are complimentary. For example, the front page counter is complimentary to the back page counter in that where a front page and a back page have both been printed, duplex printing has been performed. Hence a single counter value representing duplex printing can be used in place of separate counters for a front page and the back page.

Accordingly, for complimentary counters, e.g. front page counter and back page counter, the amount of data stored in the data warehouse can be further reduced by a factor of up to 2. If only duplex printing is performed at the image forming apparatus 11, then the amount of data for these counters is reduced by a factor of 2. This is because all of the data for the two complimentary counters can be converted into a single set of data for a combined counter, e.g. a duplex counter. If a combination of simplex printing and duplex printing is performed at the image forming apparatus 11, then the amount of data for the complimentary counters is reduced by a factor of less than 2 but greater than 1. This reduces the amount of data in the data warehouse, thereby increasing the speed of outputting the data for a report.

The consolidation method depicted in Figure 9 can be combined with the consolidation method shown in Figure 7 or Figure 8. For example, in the third bar of Figure 9, the difference could be calculated between the counter value in the last section and the counter value in the first section of the bar. This would provide a total number of duplex prints performed during the predetermined time period. Hence, the data in the third bar in Figure 9 representing duplex printing can be consolidated to a consolidated counter value for duplex printing. A corresponding process can be performed for the back page counter data in the fourth bar of Figure 9.

Figure 10 depicts a flow diagram of a method according to an embodiment of the present invention. The method comprises the storing S100, transforming S200 and outputting S300 steps shown in Figure 2.

In addition, the method optionally comprises determining S 150, for a parameter counter, a parameter counter type. The generating of the consolidated counter value for the parameter counter depends on the parameter counter type.

For example, the generating of the consolidated counter value can be performed by following the consolidation method shown in either Figure 7 or Figure 8, possibly in combination with the method shown in Figure 9.

Accordingly, the data can be consolidated in different ways depending on the parameter counter type. This allows data corresponding to different parameter counter types to be consolidated according to the present invention. Accordingly, the data can be consolidated in the most appropriate and optimal way for that particular parameter counter type. This helps to minimize the amount of data stored in the data warehouse while retaining all of the relevant data required for outputting for a report.

Optionally, the parameter counter type may be determined from a group comprising a cumulative type and a non-cumulative type. For example, if the parameter counter type is a cumulative type, then a method shown in Figure 7 can be used. If the parameter counter type is a non-cumulative type, then the method shown in Figure 8 can be used.

Accordingly, data can be consolidated in an optimal way for both cumulative and non-cumulative parameter counter types. This helps to increase the reduction in the amount of data stored in the data warehouse 20, which in turn increases the speed at which the data warehouse outputs data for a report in response to a data acquisition query.

Figure 11 depicts part of a network 10 according to an embodiment of the present invention. As with the network 10 depicted in Figure 1, the network 10 comprises a data warehouse 20 and a plurality of data collectors 13a, 13b, 13c. Each data collector 13 stores a data collector database 15a, 15b, 15c. The data warehouse 20 stores the data from the plurality of data collector databases 15 in a data warehouse database 16. After the data has undergone the transforming step S200, involving consolidating the data, the amount of data stored in the data warehouse database 16 is significantly less than the amount of data stored in the data collector databases 15a, 15b, 15c combined.

Optionally, the data from the plurality of data collector databases 15 is stored in the data warehouse 20 according to the same database management system according to which the data are stored in the plurality of data collector databases 15.

Accordingly, it is not necessary to use hybrid data processing where the live data is stored in a different type of database from the database that outputs the data for the report. Hence, the problems associated with such a hybrid data processing system are overcome according to the present invention. Furthermore, by requiring only one database management system type (RDBMS) for both the collector databases and the data warehouse, the network of databases is simplified and easier to maintain.

Optionally, the data collector databases 15 are arranged according to a relational database management system. Optionally, the data from the plurality of data collector databases 15 are stored in the data warehouse 20 according to a relational database management system.

Accordingly, a standard relational database system can be used to store the data in the data collected databases. The relational database management system is for data storage. Hence, data can be stored in the data warehouse from the data collector databases. The relational database system is cheap and easily manageable and efficient in data storage. Hence, data can be stored efficiently in the data warehouse from the data collector databases. The relational database system is relatively cheap and well accepted and wide spread on the market.

Optionally, the consolidated data are stored in the data warehouse 20 according to a relational database management system.

Accordingly, data can be retrieved from the data warehouse for the report using standard acquisition techniques for a relational database management system. For example, the universal query language, SQL, can be used for acquiring data from the data warehouse. The relational database system is cheap and easily manageable and efficient in data storage. Hence, data can be stored efficiently in the data warehouse from the data collector databases. The relational database system is relatively cheap and well accepted and wide spread on the market. The type of database used in the data warehouse does not need to be changed when transforming the data stored in the data warehouse. This reduces the possibility of an error being introduced into the data when consolidating the data.

Hence, the databases in both the data collector 13 and the data warehouse 20 may use the same day to day management system, e.g. a relational database management system.

Optionally, the storing step S100 comprises copying the data from the plurality of data collector databases 15 to the data warehouse 20. The data from the plurality of data collector databases 15 may undergo substantially no data format transformation before being stored in the data warehouse 20. This means that the data undergoes no format changes when being copied from the data collector databases 15 into the data warehouse 20. This is different from the situation where OLAP is used, in which situation data format changes are caused, for example, by transferring data from online transaction processing (OLTP) (in the data collector databases 15) to OLAP (in the data warehouse 20).

The data from the plurality of data collector databases 15 undergoes substantially no transformation in the first phase of the processing. In the second phase of processing which includes the data consolidation in the data warehouse 20, the data is transformed so as to reduce the amount of data stored in the data warehouse 20.

Accordingly, the ETL process in order to transfer the data from the data collector databases 15 into the data warehouse 20 is significantly simplified albeit the overall method it requires the additional step of generating S210 the consolidated counter values.

However, optionally, a data transformation may be used when storing the data in the data warehouse 20. Optionally, the data storage format in the data collectors 13 does not reflect the data storage format in the data warehouse 20.

Accordingly, the data can be written into the data warehouse from the data collector databases quickly. Data format transformation of the data is unnecessary. This reduces the possibility of an error being introduced into the data when writing the data into the data warehouse. Regardless of the type of report required, the data can be faithfully written into the data warehouse using the same method. This makes it easier to maintain an appropriate update link from the data collector databases to the data warehouse.

Optionally, the storing step S100 comprises appending the plurality of data collector databases 15 to each other to form a single data warehouse database 16 in the data warehouse 20. This is depicted in Figure 11. Optionally, the data warehouse database 16 has the same data format as the data collector databases 15. Optionally, the data warehouse database 16 can be generated or filled by only appending the data collector databases 15 together. Optionally, the single database 16 stored in the data warehouse 20 consists of sections that correspond to the data collector databases 15a, 15b and 15c.

This allows the storing step S100 to be performed quickly. Data may be copied from the data collector databases 15 into the data warehouse 20 based on the predetermined time period (e.g. one day) for data processing.

Accordingly, the data from the data collector databases can be written into the data warehouse 20 in a faithful way. No extra transformation is required during the phase of copying the data from the data collector databases 15 into the data warehouse 20. This provides a robust and faithful way of copying the data into the data warehouse 20. Of course, the data is later transformed in the data warehouse 20 by generating S210 consolidated counter values so as to reduce the amount of data stored in the data warehouse 20.

The present invention provides an efficient method of storing and accessing data of a parameter counter based on the standard relational databases SQL query language. The present invention provides a concrete relational database based implementation of solution methods. Optionally, these can be elaborated as a relational database inline view objects, or relational database materialized view and/or indexed view objects, either/both using standard SQL querying language.

Optionally, the method is implemented using relational database inline database view object. Optionally, the method is implemented using relational database materialized and/or indexed view objects.

The invention may take the form of a computer program containing one or more sequences of machine-readable instructions describing a method as disclosed above, or a data storage medium (e.g. semiconductor memory, magnetic or optical disk) having such a computer program stored therein.

The descriptions above are intended to be illustrative, not limiting. Thus, it will be apparent to one skilled in the art that modifications may be made to the invention as described without departing from the scope of the claims set out below. For example, data from the plurality of data collector databases 15 may be transformed when being copied to the data warehouse 20.

## Claims

1. A method for processing data of a parameter counter for an image forming apparatus for a report, the method comprising:
storing in a data warehouse data from a plurality of data collector databases;
transforming the stored data from the plurality of data collector databases into consolidated data based on the stored data from the plurality of data collector databases, thereby reducing the amount of data stored in the data warehouse; and
outputting data of a parameter counter based on the consolidated data;
wherein the transforming comprises generating, for a parameter counter, a consolidated counter value corresponding to a predetermined time period from a plurality of counter values corresponding to timings within the predetermined time period.

2. The method of claim 1, wherein the data from the plurality of data collector databases are stored in the data warehouse according to the same database management system according to which the data are stored in the plurality of data collector databases.

3. The method of any of the preceding claims, wherein the storing comprises copying the data from the plurality of data collector databases to the data warehouse, wherein the data from the plurality of data collector databases undergoes substantially no data format transformation before being stored in the data warehouse.

4. The method of any of the preceding claims, wherein the data from the plurality of data collector databases are stored in the data warehouse according to a relational database management system.

5. The method of any of the preceding claims, wherein the consolidated data are stored in the data warehouse according to a relational database management system.

6. The method of any of the preceding claims, comprising determining, for a parameter counter, a parameter counter type, wherein the generating of the consolidated counter value for the parameter counter depends on the parameter counter type.

7. The method of claim 6, wherein the parameter counter type is determined from a group comprising a cumulative type and a non-cumulative type.

8. The method of any of the preceding claims, wherein the generating comprises, for a cumulative parameter counter type, calculating a difference between a counter value at the end of the predetermined time period and a counter value at the start of the predetermined time period so as to generate the consolidated counter value.

9. The method of any of the preceding claims, wherein the generating comprises, for a non-cumulative parameter counter type, summing the plurality of counter values corresponding to timings within the predetermined time period so as to generate the consolidated counter value.

10. The method of any of the preceding claims, wherein the transforming comprises deleting the plurality of counter values corresponding to timings within the predetermined time period.

11. The method of any of the preceding claims, wherein the generating comprises, for a front page counter and a back page counter, for a timing within the predetermined time period, converting the back page counter value to a duplex counter value, and reducing the front page counter value by the back page counter value or the duplex counter value.

12. The method of any of the preceding claims, wherein the storing comprises appending the plurality of data collector databases to each other to form a single database.

13. A computer program that when implemented on a computer causes the computer to perform the method according to any of the preceding claims.

14. A data warehouse for processing data of a parameter counter for an image forming apparatus for a report, the data warehouse comprising:
a memory unit configured to store data from a plurality of data collector databases;
a data transforming unit configured to transform the stored data from the plurality of data collector databases into consolidated data based on the stored data from the plurality of data collector databases, thereby reducing the amount of data stored in the data warehouse; and
a data outputting unit configured to output data of a parameter counter based on the consolidated data;
wherein the data transforming unit comprises a data generating unit configured to generate, for a parameter counter, a consolidated counter value corresponding to a predetermined time period from a plurality of counter values corresponding to timings within the predetermined time period.

15. A network comprising:
the data warehouse of claim 14; and
a plurality of data collectors, each storing a corresponding one of the plurality of data collector databases, wherein each of the data collectors is configured to poll a plurality of image forming apparatuses so as to obtain data of a parameter counter, and to store the obtained data of a parameter counter in the data collector database stored on the data collector.
